# EUROPÄISCHE PATENTSCHRIFT

(11) **EP 1 204 547 B1**
(45) Veröffentlichungstag und Bekanntmachung des Hinweises auf die Patenterteilung: **07.06.2006**
(21) Anmeldenummer: 00956313.1
(22) Anmeldetag: 27.07.2000
(51) Int. Cl.: B60T 13/16, B60T 8/40

(54) **HYDRAULISCHE BREMSANLAGE**
HYDRAULIC BRAKE SYSTEM
SYSTEME DE FREINAGE HYDRAULIQUE

(30) Priorität: 28.07.1999 DE 19934802; 28.07.1999 DE 19934808; 28.07.1999 DE 19934807
(43) Veröffentlichungstag der Anmeldung: 15.05.2002
(73) Patentinhaber: Continental Teves AG & Co. oHG, 60488 Frankfurt am Main (DE)
(72) Erfinder: FEIGEL, Hans-Jörg, 61191 Rosbach (DE)
(86) Internationale Anmeldenummer: PCT/EP2000/007233
(87) Internationale Veröffentlichungsnummer: WO 2001/007307

(56) Entgegenhaltungen:
- EP-A- 0 774 391
- DE-A- 3 903 532
- DE-A- 19 643 343
- DE-C- 19 716 404
- GB-A- 2 173 270

## Beschreibung

Die Erfindung betrifft eine hydraulische Bremsanlage für Fahrzeuge, mit einer Bremsdruckgebereinheit, die durch Einleitung einer Betätigungskraft über eine Betätigungseinrichtung betätigbar ist, die eine erste hydraulische Kammer aufweist, deren Volumen sich bei Betätigung der Bremsdruckgebereinheit verkleinert, aus der aufgrund der Volumenverkleinerung Druckmittelvolumen verdrängt wird und an der Radbremsen mittels einer ersten hydraulischen Verbindung angeschlossen sind, in der eine Pumpe angeordnet ist, durch die das aufgrund der Volumenverkleinerung aus der ersten hydraulischen Kammer verdrängte Druckmittelvolumen in die Radbremsen förderbar ist.

Ein Gattungsgemäße Bremsanlage ist aus dem Dokument DE-A-3 903 532 bekannt geworden.

In der Technik erhalten hydraulische Bremsanlagen mit Hydraulikverstärkern immer größere Bedeutung. Das gilt insbesondere für Verstärker in Kraftfahrzeugen, bei denen die einzubauenden Verstärker möglichst kompakt sein sollen. Die bisher regelmäßig verwendeten Vakuumverstärker sind darüber hinaus vielfach effektiv nicht mehr einsetzbar, da sie einen erheblichen Platz benötigen und bei moderneren Fahrzeugen das zur Verstärkung benötigte Vakuum nicht mehr zur Verfügung steht.

Die bekannten Hydraulikverstärker waren aber entweder vergleichsweise aufwendig und nur relativ ungenau regelbar oder sie verursachten erhebliche Rückwirkungen auf die Betätigurigseinrichtung, z.B. das Bremspeadal und erzeugten so ein für den Fahrer unkomfortables Pedalgefühl.

Aufgabe der vorliegenden Erfindung ist es, die Nachteile derartiger Bremsanlagen zu überwinden und Rückwirkungen des hydraulischen Druckaufbaus oder Druckabbaus auf die Betätigungseinrichtung zu reduzieren.

Die Aufgabe wird durch die sich aus dem kennzeichnenden Teil des Anspruchs 1 ergebende Merkmalskombination gelöst.

Die vorliegende Erfindung besteht im Prinzip also darin, in der ersten hydraulischen Verbindung zwischen der ersten hydraulischen Kammer einer Bremsdruckgebereinheit und den Radbremsen eine Pumpe anzuordnen, die das bei einer Einleitung einer Betätigungskraft der Betätigungseinrichtung aus der ersten hydraulischen Kammer verdrängte Druckmittelvolumen in die Radbremsen fördert und in der ersten hydraulischen Kammer ein elastisches Mittel anzuordnen, zur Nachbildung einer herkömmlichen Volumen-Druck-Kennlinie von Radbremsen und damit zur Erzeugung einer Kraft-Weg-Kennlinie oder einer Kraft-Hub-Kennlinie, die im Falle eines Bremspedals als Betätigungseinrichtung dem Fahrer ein gewohntes und komfortables Pedalgefühl vermittelt.

Durch Förderung des verdrangten Volumens aus der ersten hydraulischen Kammer der Bremsdurckgebereinheit bewirkt die Pumpe eine Druckdifferenz zwischen der ersten hydraulischen Kammer und den Radbremsen. Mit Hilfe einer im wesentlichen kontinuierlich fördernden Pumpe wird der Druck in der ersten hydraulischen Kammer so vorteilhaft auf Drücke nahe 0 bar eingestellt. Damit spart der Fahrer im wesentlichen nur die Wirkung des elastischen Mittels; die Rückwirkung auf die Betätigungseinrichtung, insbesondere eine Pedalrückwirkung, des an den Radbremsen aufgebauten Bremsdrucks ist stark reduziert.

Ein weiterer Vorteil ist die technisch relativ einfache Ausgestaltung der Bremsanlage. Im Grundsatz wird hier nur eine Pumpe zur Druckaufbringung des Bremsdrucks an den Radbremsen benötigt. Darüber hinaus kann die Pumpe durch die Volumenverdrängung aus der ersten hydraulischen Kammer mit Hilfe der Betätigungskraft des Fahrers vorgeladen werden, was eine wesentliche Verbesserung des Bremsvorgangs und zugleich eine Voraussetzung für ein betriebssicheres Funktionieren bei tieferen Temperaturen ist. Da kein zusätzlicher Speicher bei der erfindungsgemäßen Bremsanlage benötigt wird, ist das System technisch einfach und damit kostengünstig.

Weiterhin ist ein direkter Zusammenhang der Kraft-Hub-Kennlinie der Betätigungseinrichtung und Volumen-Druck-Kennlinie im Grundsatz nicht mehr gegeben, da Kraft und Druck bzw. Volumen und Weg hier im Prinzip voneinander unabhängig einstellbar sind. Die Verstärkungscharakteristik der Bremsanlage kann so im Grundsatz im wesentlichen beliebig gestaltet werden.

Als Pumpe wird erfindungsgemäß eine Verdrärigerpumpe, vorzugsweise eine kontinuierlich fördernde Verdrängerpumpe, eingesetzt. Dabei wird der Eingangsdruck durch einen angeschlossenen Elektromotor so weit verstärkt, bis der Ausgangsdruck an der Pumpe dem gewünschten, verstärkten Druck entspricht. Besonders vorteilhaft bei einer derartigen Pumpe ist es, dass ein pulsationsarmer und leiser Druckaufbau erreicht wird. Vorteilhaft ist dabei die Verstärkungcharakteristik durch entsprechende Auslegung und Steuerung der Pumpe frei wählbar. Innerhalb des gesamten Regelkreises findet kein Medienbruch statt, da sowohl die Bremsdruckgebereinheit als auch die Betätigungskreise der Radbremsen hydraulisch arbeiten. Als besonders geeignete, kontinuierlich fördernde Verdrängerpumpen haben sich Zahnradpumpen, Flügelzellenpumpen und Spindelpumpen, insbesondere jedoch Innenzahnradpumpen, bewährt.

Die Pumpe wird vorteilhaft mit einem Elektromotor angetrieben, vorzugsweise ein bürstenloser, permanent erregter Gleichstrommotor. Dieser kann zudem auch bei nicht benötigtem Bremsdruck im Leerlauf betrieben werden, so dass ein Anfahren des Motors bei benötigtem Bremsdruck in der Regel nicht notwendig ist.

Nach der Erfindung ist es vorgesehen, dass die Pumpe eine sauggeregelte oder sauggedrosselte Pumpe sein kann. Bei einer sauggeregelten/saugedrosselten Pumpe wird der durch die Pumpe erzeugte Druck durch den der Pumpe an deren Saugseite zugeführten Druckmittel-Volumenstrom geregelt. Diese Art der Ansteuerung der Pumpe ist gegenüber einer Taktansteuerung relativ einfach zu realisieren und gut zu regeln. Durch die Saugregelung der Pumpe ergibt sich der Vorteil, dass die Energie optimal genutzt wird, denn die Pumpe wird nur so stark belastet, wie es zum Druckaufbau gerade notwendig ist.

Erfindungsgemäß kann die Pumpe auch als eine bidirektional fördernde oder reversierende Pumpe ausgebildet sein, womit sowohl eine Druckerhöhung in Richtung zu den Radbremsen als auch eine Druckerniedrigung des an den Radbremsen anstehenden Drucks aktiv durch die Pumpe erfolgen kann.

Erfindungsgemäß wird zwischen der ersten hydraulischen Kammer und den Radbremsen eine zweite hydraulische Verbindung angeordnet, in der ein Ventil, insbesondere ein Regelventil angeordnet ist, mit dem der durch die Pumpe geförderte Volumenstrom an Druckmittels einstellbar ist. Durch diese Maßnahme erfolgt eine technisch relativ einfache und kostengünstige Einstellung des gewünschten Bremsdrucks. Dabei ist es besonders vorteilhaft, wenn das Regelventil analog ansteuerbar ist. Damit wird ein relativ einfacher Aufbau der erfindungsgemäßen Bremsanlage möglich. Der Druck kann so einerseits sehr gut geregelt werden und andererseits verursacht ein Analogventil nur relativ geringe Geräusche.

Nach der Erfindung ist ein Rückschlagventil vorgesehen, das durch die Druckdifferenz zwischen der ersten hydraulischen Kammer und den Radbremsen ansteuerbar ist und das bei Überdruck in der ersten hydraulischen Kammer die zweite hydraulische Verbindung öffnet. Damit wird erreicht, dass das vom Fahrer bei einer schnellen Bremsbetätigung verdrängte Volumen aus der ersten hydraulischen Kammer direkt, dass bedeutet an der Pumpe vorbei, in die Radbremse gefördert wird. Damit wird eine schnelle Bremswirkung in einer Phase gewährleistet, in der die Pumpe durch Trägheitseffekte noch keinen oder nur einen kleinen Beitrag leisten kann.

Erfindungsgemäß ist das Regelventil als Teil eines hydraulisch-mechanischen Position-Folgereglers ausgebildet, wobei aufgrund der Verformung des elastischen Mittels in der ersten hydraulischen Kammer die Ventilstellung dieses Position-Folgereglers veränderbar ist. Somit kann vorteilhaft ohne eine elektronisch Ansteuerung des Ventils eine Druckregelung erfolgen.

Es ist vorgesehen, dass zwischen der ersten hydraulischen Kammer und einem Druckmittelvorratsbehälter eine dritte hydraulische Verbindung besteht, in der eine zweite Ventileinrichtung angeordnet ist. Damit wird vorteilhaft ein Nachsaugen von Bremsflüssigkeit aus dem Druckmittelvorratsbehälter ermöglicht, wenn das aus der ersten hydraulischen Kammer verdrängte Volumen kleiner ist als das für einen bestimmten gewünschten Bremsdruck benötigte Volumen.

Nach der Erfindung weist die Bremsdruckgebereinheit einen Hauptbremszylinder mit mindestens einer hydraulischen Kammer (Hauptbremszylinder-Kammer), vorzugsweise einen Tandemhauptbremszylinder mit zwei hydraulischen Kammern, auf, dessen eine Hauptbremszylinder-Kammer über eine hydraulische Leitung verbunden ist mit einer zweiten Kolbenkammer, in der der erste hydraulische Kolben als ein Trennkolben , vorzugsweise ein Trennkolben mit einem Zentralventil, ausgebildet ist und wodurch das elastische Mittel, das in der ersten hydraulischen Kammer angeordnet ist, mit Druckkraft beaufschlagbar ist. Durch den Trennkolben erfolgt eine hydraulische Trennung der Tandemhauptbremszylinderkreise vom dritten Bremskreis, bei dem die erste hydraulische Kammer mit der Energieversorgung durch die Pumpe, den Anschluß an den Druckmittel-Vorratsbehälter über vorzugsweise das Zentralventil und über vorzugsweise stromlos offene Ventile mit den Hinterradbremsen verbunden und über vorzugsweise stromlos geschlossene Ventile mit den Vorderradbremsen des Fahrzeugs verbindbar ist. Diese Trennung hat den Vorteil, dass bei Ausfall der Bremsanlage, dass bedeutet bei einem Ausfall der Stromversorgung, die gesamte Hubarbeit des Fahrers verteilt werden kann auf die Beaufschlagung der Vorderachs-Radbremsen über die Tandemhauptbremszylinderkreise und die Beaufschlagung der Hinterachs-Radbremsen über den dritten Bremskreis. Bei einem Ausfall des dritten Bremskreises ist damit nur die Hinterachse betroffen und ein Ausfall eines anderen Bremskreises führt nur zum Ausfall der Vorderachs-Radbremsen. Daraus entsteht der Vorteil einer hohen Verfügbarkeit der Bremsanlage.

In einer bevorzugten Ausführungsform der Erfindung ist es vorgesehen, dass die mindestens eine Hauptbremszylinder-Kammer, vorzugsweise zwei Hauptbremszylinder-Kammern eines Tandemhauptbremszylinder, mit zwei vorzugsweise vorderen Radbremsen verbunden sind über mindestens eine hydraulische Leitung, vorzugsweise zwei hydraulische Leitungen, in die ein elektronisch ansteuerbares Ventil eingefügt ist, dass zwischen der ersten hydraulischen Kammer und den Radbremsen elektronisch ansteuerbare Ventile vorgesehen sind und dass zwischen einer vierten hydraulischen Leitung, zur Rückführung von Druckmittel aus den Radbremsen, elektronisch ansteuerbare Ventile angeordnet sind. Damit ist eine Regelung des Bremsdrucks sehr gut möglich.

Erfindungsgemäß sind die mindestens eine Hauptbremszylinder-Kammer, vorzugsweise zwei hydraulische Kammern eines Tandemhauptbremszylinder, mit zwei vorzugsweise vorderen Radbremsen verbunden über mindestens eine hydraulische Leitung, vorzugsweise zwei hydraulische Leitungen, in die ein Trennventil, vorzugsweise jeweils ein elektromagnetisch betätigbares, stromlos offenes Trennventil, eingefügt ist und die ein elastisches Mittel aufweisende, erste hydraulische Kammer ist mit zwei vorzugsweise hinteren Radbremsen über die eine Leitung und daran anschließende Leitungsabschnitte verbunden, in die ein Trennventil, vorzugsweise jeweils ein elektromagnetisch betätigbares, stromlos offenes Trennventil, eingefügt ist und die ein elastisches Mittel aufweisende, erste hydraulische Kammer ist mit den zwei vorzugsweise vorderen Radbremsen über eine Leitung und daran anschließende Leitungsabschnitte verbindbar, in die ein Trennventil, vorzugsweise jeweils ein elektromagnetisch betätigbares, stromlos geschlossenes Trennventil, eingefügt ist. Damit ist eine radindividuelle Regelung des Bremsdrucks sehr gut möglich.

Es ist mach der Erfindung vorgesehen, eine vierte hydraulische Leitung angeordnet ist, die über Trennventile vorzugsweise elektromagnetisch betätigbare, stromlos geschlossene Ventil, absperrbar ist und in einer Schaltstellung einen Rückfluß von Druckmittel von den Radbremsen, vorzugsweise über eine Hauptbremszylinder-Kammer, in den Druckmittel-Vorratsbehälter ermöglicht. Damit kann ein Druckabbau schnell uns sicher erfolgen.

Die Erfindung wird in der nachfolgenden Beschreibung unter Bezugnahme auf die beiliegenden Abbildungen (Fig.1 bis Fig.8) beispielhaft näher erläutert.

Die Abbildungen (Fig.1 bis Fig. 8) zeigen:
Fig. 1 eine Ausführungsform der erfindungsgemäßen Bremsanlage mit einer ein elastisches Mittel aufweisenden ersten hydraulischen Kammer und mit einer reversiblen Pumpe,
Fig. 2 den sich ergebenden Bremsdruck P_{Rad} in der Radbremse und den Betätigungsweg S des Bremspedals in Abhängigkeit von der Padalkraft F,
Fig. 3 eine Ausführungsform der erfindungsgemäßen Bremsanlage mit einem zur Pumpe parallel geschalteten Ventil,
Fig. 4 eine Variante mit einem hydraulisch-mechanischen Positions-Folgeregler,
Fig. 5 eine Ausführungsform der erfindungsgemäßen Bremsanlage, bei der die Bremsdruckgebereinheit einen Tandemhauptzylinder aufweist,
Fig. 6 eine Variante der Ausführungsform nach Fig. 5, bei der der Kolben der ersten hydraulischen Kammer ein Zentralventil aufweist,
Fig. 7 eine Ausführungsform mit Tandemhauptzylinder, bei der das Analogventils durch ein hydraulisch-mechanisches Ventil ersetzt ist,
Fig. 8 eine Variante der in Fig. 6 gezeigten Ausführungsform mit einem zusätzlichen Trennventil.

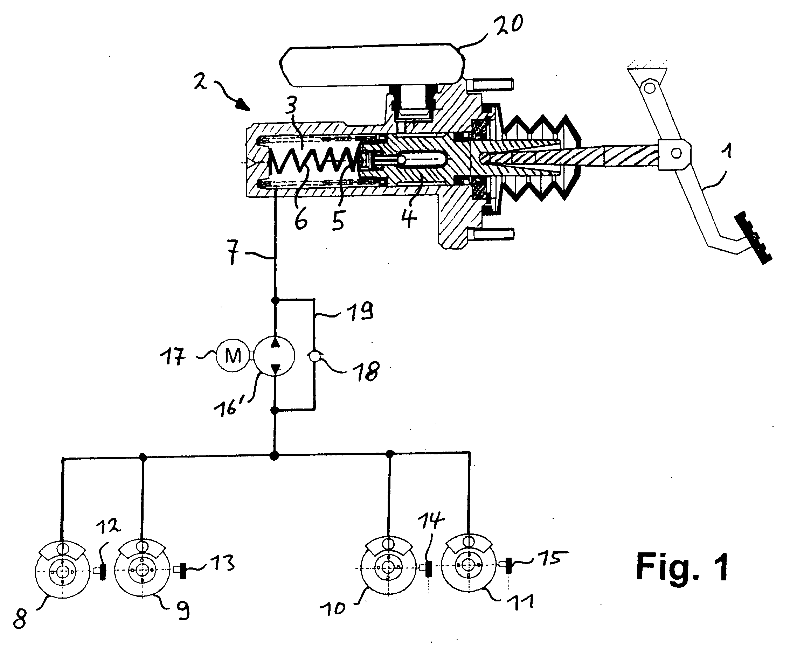

Die in der Fig. 1 dargestellte Bremsanlage besteht im wesentlichen aus einer mittels eines Betätigungspedals 1 betätigbaren Bremsdruckgebereinheit 2, die eine erste hydraulische Kammer 3 aufweist, in der ein erster Kolben 4 mit einem Zentralventil 5 angeordnet ist und der ein elastisches Mittel, vorzugsweise eine Feder 6, zugeordnet ist. Die erste hydraulische Kammer 3 ist mittels einer ersten hydraulischen Leitung 7 mit den Radbremsen 8,9,10,11 verbunden, denen in diesem Beispiel Radrehzahlsensoren 12,13,14,15 zugeordnet sind. In der ersten hydraulischen Leitung 7 ist eine Pumpe eingefügt, die hier als bidirektionale Pumpe 16' ausgeführt ist und mit einem Motor 17 betrieben wird und zu der parallel ein Rückschlagventil 18 über eine zweite hydraulische Leitung 19 geschaltet ist. Ferner weist das System einen Druckmittel-Vorratsbehälter 20 auf. Zum Verständnis der Erfindung sind weitere Regelventile zur Bremsdruckregelung, wie sie z.B. bei einer ABS-Einrichtung oder ESP-Einrichtung vorgesehen sind, nicht unbedingt notwendig und wurden somit weggelassen.

Bei einer Betätigung des Betätigungspedals 1 wird auf den Kolben 4 eine Kraft und damit ein Druck in der ersten hydraulischen Kammer 3 aufgebracht. Das Druckmittel strömt aus der ersten hydraulischen Kammer 3 über die daran angeschlossene hydraulische Leitung 7 zu der Pumpe 16'. Wird die Pumpe 16' eingeschaltet, d.h. wird der Motor 17 von einer nicht in der Fig. 1 dargestellten Steuereinrichtung mit Strom versorgt, treibt er die Pumpe 16' an. Mit Hilfe der Pumpe 16' wird der Eingangsdruck verstärkt und von der Ausgangsseite der Pumpe 16' über die zweite Leitung 19 den Radbremsen 8,9,10,11 zugeführt. Für den Fall, dass die Pumpe 16' unwirksam ist, kann der in der Druckgebereinheit 2 erzeugte Druck direkt auf die Radbremsen 8,9,10,11 gegeben werden. Damit wird eine Hilfsbremsfunktion sichergestellt. Es ist vorgesehen, dass der Motor 17 die Pumpe 16' nur dann antreibt, wenn Bedarf besteht. Dies kann durch ein entsprechendes Schaltgetriebe geschehen, falls der Motor 17 ständig läuft. Außer bei den Verstärkung benötigenden Bremsvorgängen kann der Motor 17 auch nur dann eingeschaltet werden, wenn vom Fahrerwillen und damit von der Bremdruckgebereinheit unabhängig die Radbremsen 8,9,10,11 mit Bremsdruck beaufschlagt werden soll, z.B. im Fall eines ASR- oder ESP- Regelungseingriffs. Durch eine entsprechende Auslegung des Zentralventils 5 ist es möglich, das für den Fall eines ASR- oder ESP-Regelungseingriffs Druckmittel aus dem Druckmittel-Vorratsbehälter 20 über das Zentralventil 5 und die erste hydraulische Kammer 3 durch die Pumpe 16' angesaugt wird und den Radbremsen 8,9,10,11 zugeführt wird. Zum Abbau von Bremsdruck wird die hier in Fig. 1 dargestellte bidirektional arbeitende Pumpe 16' in ihrer Arbeitsrichtung umgestellt und fördert dann Druckmittel von den Radbremsen 8,9,10,11 in Richtung der Druckgebereinheit 2. Über das Zentralventil 5 kann das Druckmittel schließlich bis in den Druckmittel-Vorratsbehälter 20 gelangen.

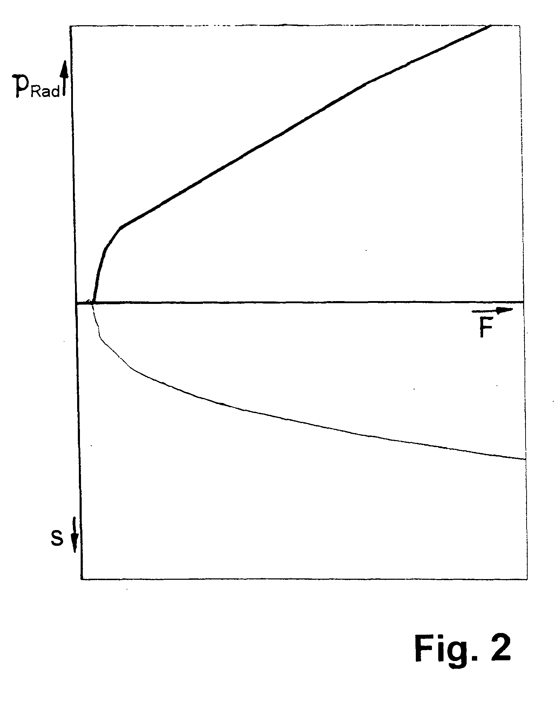

Der sich ergebende Bremsdruck in der Radbremse P_{Rad} und der Betätigungsweg des Bremspedals S sind in der Fig. 2 in Abhängigkeit von der Padalkraft F dargestellt. Der Bremsdruck P_{Rad} ist abhängig von dem aus der ersten hydraulischen Kammer 3 verdrängten Volumen und der Volumen-Aufnahmekennlinie der Radbremsen, 8,9,10,11 selbst. Die Pedalkraft-Pedalweg-Kennlinie wird durch die Kennlinie der Feder 6 bestimmt. Die Pedalkraft-Pedalweg-Kennlinie ist somit durch die Federkennlinie und die Pedalkraft-Bremsdruck-Kennlinie mit Hilfe der hydraulischen Auslegung der Bremsanlage sowie der Steuerung des Motors 17 und der Pumpe 16' in relativ weiten Grenzen einstellbar.

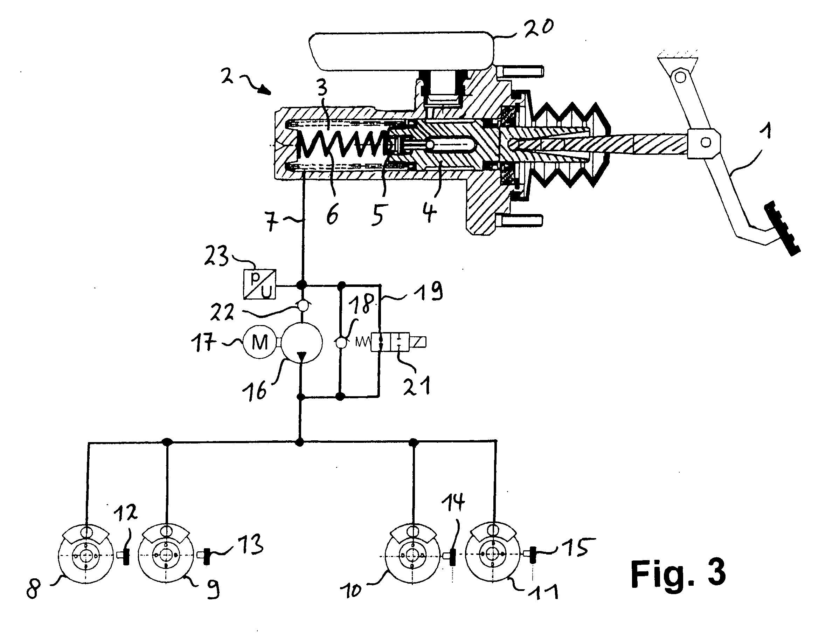

Die nachfolgenden Figuren 3 bis 8 werden nur insoweit beschrieben, als Anweichung gegenüber Fig. 1 bzw. den jeweils vorangegangenen Figuren festzustellen sind.

Aus Fig. 3 ist in vorteilhafter Weiterbildung der Erfindung zu entnehmen, dass die bidirektionale Pumpe 16' durch eine Pumpe 16 mit einer Arbeitsrichtung ersetzt werden kann, wobei hier zusätzlich ein der Pumpe 16 und dem Rückschlagventil 18 parallel geschaltetes Ventil 21, vorzugsweise ein Analogventil, angeordnet ist. Die Pumpeneingangsseite weist ein in Richtung der Druckgebereinheit 2 sich öffnendes Rückschlagventil 22 auf. In der ersten Leitung 7 ist zusätzlich ein erster Drucksensor 23 angeordnet. Hier erfolgt die Regelung des Bremsdruckaufbaus und -abbaus durch das Ventil 21. Dies wird aus regelungstechnischen Gründen und für eine geringe Geräuschbelastung vorteilhaft als Analogventil ausgeführt. Die Pumpe 16 kann hier während eines Bremsvorgangs vorteilhaft durchgehend betrieben werden, da der Volumenstrom von Druckmittel zu den Radbremsen 8,9,10,11 kontinuierlich über das Ventil 21 regelbar ist. Die Pumpe 16 kann sauggeregelt bzw. sauggedrosselt sein. Dann wird nur das über die Leitung 7 aus der ersten Kammer 3 der Druckgebereinheit 2 verdrängte Volumen mit Hilfe der Pumpe 16 in die Radbremsen 8,9,10,11 befördert. In der ersten hydraulischen Kammer 3 wird erfindungsgemäß so im wesentlichen immer ein Druck von ca. 0 bar eingestellt.

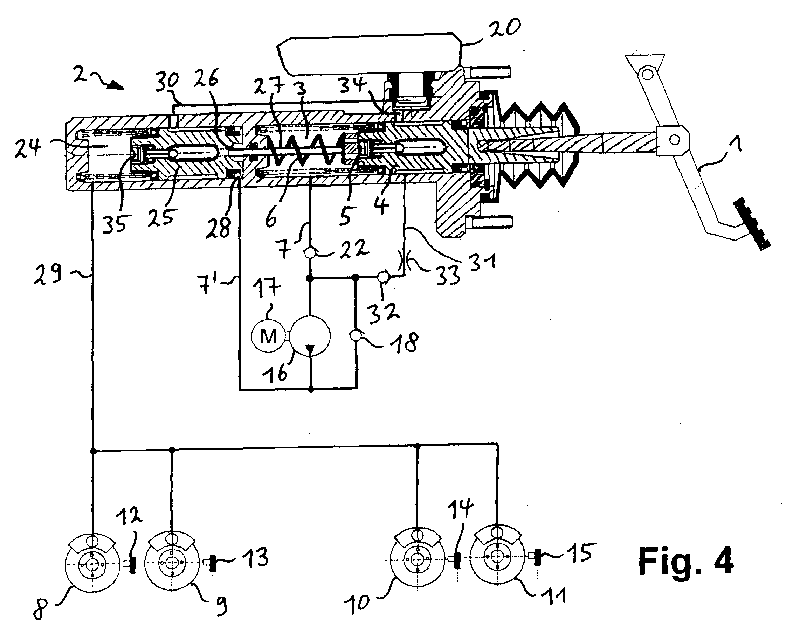

Fig. 4 unterscheidet sich von Fig. 3 dadurch, dass der Bremsdruckgebereinheit 2 ein hydraulisch-mechanischen Position-Folgeregler zugeordnet ist, der eine zweite hydraulische Kammer 24 aufweist, in der ein Folgekoben 25 angeordnet ist. An dem Folgekolben 25 ist ein Folgeventil 26 angeordnet, dem eine Stellstange 27 zugeordnet ist, die in Wirkverbindung mit dem ersten Kolben 4 steht und deren Position sich mit der Verformung der Feder 6 verändert. Die pumpenausgangsseitige dritte hydraulische Leitung 7' in Richtung der Radbremsen 8,9,10,11 führt in eine erste hydraulischen Kolbenkammer 28, der durch den Folgekolben 25 von der zweiten hydraulischen Kammer 24 getrennt ist. Von der zweiten hydraulischen Kammer 24 führt eine vierte hydraulische Leitung 29 zu den Radbremsen 8,9,10,11. Bei einem Bremsvorgang wird analog zu den zuvor dargestellten Ausführungsformen das Druckmittel aus der mit der Feder 6 versehenen ersten Kammer 3, über die Leitung 7 der Pumpe 16 zugeführt und dann entsprechend druckverstärkt über die dritte Leitung 7' in die erste Kolbenkammer 28 geführt. Durch das dann aus der zweiten hydraulischen Kammer 24 verdrängte Druckmittelvolumen werden die Radbremsen 8,9,10,11 über die Leitung 29 mit Druck beaufschlagt. Eine Regelung des Drucks erfolgt hier mit Hilfe des Folgeventils 26, das entsprechend dem durch die Pumpe erzeugten Druck mittels der Stellstange 27 geöffnet wird, wodurch ein bestimmtes Volumen an Druckmittel über eine fünfte hydraulische Leitung 30 in den Druckmittel-Vorratsbehälter 20 zurückströmen kann und wodurch der über den Folgekolben 25 und die vierte Leitung 29 in den Radbremsen 8,9,10,11 aufgebrachte Druck geregelt wird. Die Pumpe 16 ist ferner über eine sechste hydraulische Leitung 31, in die ein Rückschlagventil 32 und eine Drossel 33 geschaltet sind und über eine siebte hydraulische Leitung 34 mit dem Druckmittel-Vorratsbehälter 20 verbunden. Dadurch können Leckageströme, beispielsweise ein Leckagestrom an dem Folgeventil 26, der zu einem Verlust an Druckmittel in der ersten Kolbenkammer 28 führen kann, ausgeglichen werden. Ein Druckabbau ist hier über ein Zentralventil 35 im Folgekolben 25 und die Leitung 30 bis in den Druckmittel-Vorratsbehälter 20 möglich.

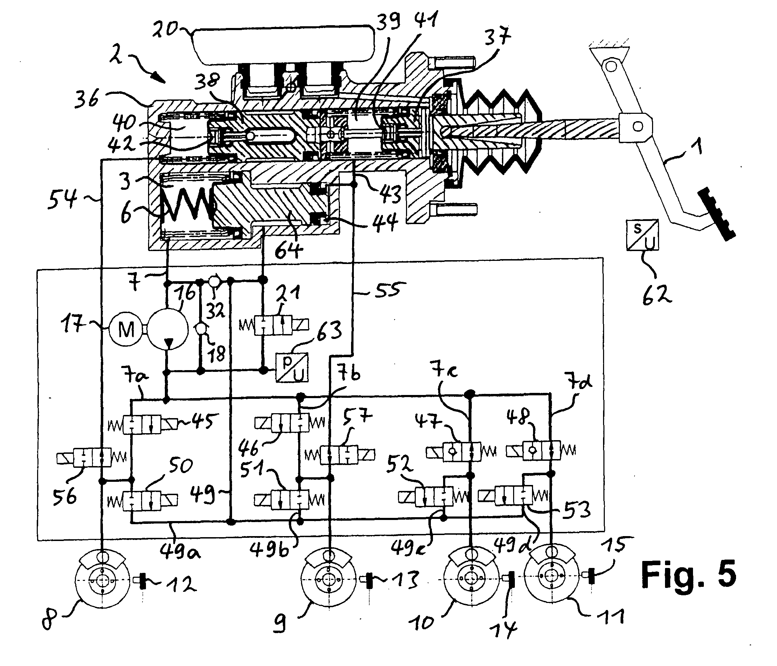

In Fig. 5 ist eine Ausführungsform der Erfindung dargestellt, bei dem die Bremsdruckgebereinheit 2 einen durch das Bremspedal betätigbaren Tandemhauptzylinder 36 aufweist, der im wesentlichen zwei, durch einen ersten Hauptzylinderkolben 37 und einen zweiten Hauptzylinderkolben 38 voneinander getrennte Druckräume, eine erste Hauptzylinderkammer 39 und eine zweite Hauptzylinderkammer 40, aufweist. Die Hauptzylinderkolben 37,38 weisen jeweils ein Zentralventil 41,42 auf. Die Funktionsweise derartiger Tandemhauptzylinder 36 wird im vorliegenden Zusammenhang nicht ausführlich erklärt, da sie dem auf dem einschlägigen Fachgebiet tätigen Fachmann hinlänglich bekannt ist. Eine direkte Beaufschlagung der Radbremsen 8,9,10,11 mittels des in den beiden Bremskreisen des Tandemhauptzylinders 36 erzeugten Drucks erfolgt hier insbesondere in Notsituationen, dass bedeutet im Fall eines Ausfalls der Pumpe 16 bzw. des Motors 17. Über eine achte hydraulische Leitung 43 ist der erste Hauptzylinderdruckraum 39 mit der zweiten hydraulischen Kolbenkammer 44 verbunden, die durch den Trennkolben 64, der ein Zentralventil 65 aufweist, gegen die erste hydraulische Kammer 3 abgetrennt ist, in der das elastische Mittel 6 angeordnet ist. Durch den Trennkolben 64 erfolgt so eine hydraulische Trennung der zwei Tandemhauptbremszylinderkreise von einem dritten Bremskreis, bei dem die erste hydraulische Kammer 3 mit der Energieversorgung durch die Pumpe 6, den Anschluß an den Druckmittel-Vorratsbehälter 20 über vorzugsweise das Zentralventil 65 und über vorzugsweise stromlos offene Ventile 47,48 mit den Hinterradbremsen 10,11 verbunden und über vorzugsweise stromlos geschlossene Ventile 45,46 mit den Vorderradbremsen 8,9 des Fahrzeugs verbindbar ist. In Fig. 5 sind die entsprechenden Ventile dargestellt, die eine ABS-/ASR-Regelung des Bremsdrucks ermöglichen. Dazu dienen die in den an die zweite Leitung 7 anschließenden Leitungsabschnitten 7a,7b,7c,7d zu den einzelnen Radbremsen 8,9,10,11 eingefügten Einlaßventile 45,46,47,48 und die in den von den Radbremsen 8,9,10,11 wegführenden Leitungsabschnitten 49a,49b,49c,49d einer neunten Leitung 49 angeordneten Auslaßventile 50,51,52,53. Von den Druckräumen des ersten Hauptzylinders 39 und zweiten Hauptzylinders 40 führen eine zehnte und eine elfte hydraulische Leitung 54 und 55 zu den Radbremsen 8 und 9, die über Ventile 56 und 57 absperrbar sind.

Bei einer Normalbremsung wird Druckmittelvolumen aus der ersten Hauptkammer 39 in die zweite hydraulische Kolbenkammer 44 verdrängt und der Trennkolben 64 gegen den Widerstand der Feder 6 bewegt. Entsprechend der Bewegung des Trennkolbens 64 wird Druckmittel auch aus der ersten hydraulischen Kammer 3 verdrängt und über die Leitung 7, die Pumpe 16 und anschließende Leitungen 7a,7b,7c,7d den Radbremsen 8,9,10,11 zugeführt. Die Einlaßventile 45,46,47,48 sind dann geöffnet. Bei einer Normalbremsung ohne ABS-Regelungseingriff sind die Auslaßventile 50,51,52,53 geschlossen. Die Steuerung dieser Ventile erfolgt nach den bekannten Verfahren der elektronischen Bremsenregelungssysteme, wie ABS, ASR und ESP. Der in der zweiten Leitung 19 anstehende Bremsdruck wird durch einen zweiten Drucksensor 63 gemessen. Die Steuerung aller Ventile und des Motors 17 erfolgt entsprechend eines mit Hilfe eines Wegsensors 62 am Betätigungspedal 1 erfassten Fahrerbremswunsches und in Abhängigkeit des tatsächlich durch den zweiten Drucksensor 63 gemessenen Drucks. Mit Hilfe des Wegsensorsignals ist hierbei eine gute "Springerfunktion" darstellbar, dass bedeutet es wird eine bestimmte Weg-Druck-Kennlinie des Systems eingestellt, wodurch die Dosierbarkeit der Bremswirkung für den Fahrer im unteren Bereich des Bremsdrucks verbessert wird. Die Ventile 47 und 48 sowie 56 und 57 sind, wie hier dargestellt, im unbestromten Zustand vorzugsweise geöffnet und stellen eine Notbremsfunktion bei einem Ausfall der hydraulischen Verstärkung durch die Pumpe 16 bzw. den Motor 17 sicher. Der Bremsdruck kann dann einerseits von den Druckräumen des ersten und zweiten Hauptzylinders 39,40 über die Leitungen 54, 55 zu den Radbremsen 8 und 9 sowie anderseits von dem ersten Druckraum 3 über die Leitung 7 zu den Radbremsen 10 und 11 direkt durch eine Betätigung des Bremspedals 1 eingesteuert werden. Somit sind bei einem Systemausfall alle vier Radbremsen 8,9,10,11 mit der Fahrerfußkraft als Druckquelle beaufschlagbar. Durch die Trennung der hydraulischen Kreise wird bei einem Ausfall der Energieversorgung durch die Pumpe, die gesamte vom Fahrer geleistete Hubarbeit zur Beaufschlagung der Vorderachs-Radbremsen über die Kreise des Tandemhauptbremszylinders und für die Hinterachs-Radbremsen über den dtritten Bremskreis ermöglicht. Somit ist sichergestellt, dass bei einem Ausfall des dritten Bremskreises ist nur die Hinterachse betroffen ist und andererseits ein Ausfall eines anderen Bremskreises (Tandemhauptbremszylinderkreis) nur zum Ausfall der Vorderachs-Radbremsen führen kann.

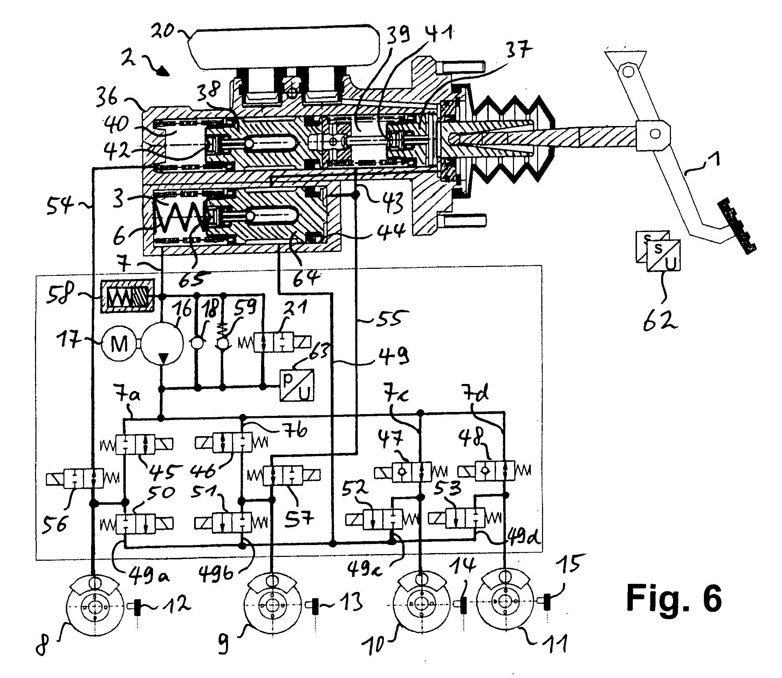

In der Fig. 6 ist ein der Fig. 5 entsprechender Aufbau dargestellt, bei dem der Trennkolben 64 der ersten hydraulischen Kammer 3 ein Zentralventil 5 aufweist. Ferner ist in der Leitung 7 ein Dämpfungskammer 58 zur Pulsationsdämpfung integriert und parallel zum Ventil 21 ein in Richtung der ersten hydraulischen Kammer sich öffnendes Druckbegrenzungsventil 59 angeordnet, wodurch eine rasche und sichere Verringerung des an den Radbremsen 8,9,10,11 anstehenden Drucks über die Auslaßventile 50,51,52,53 erzielt wird. Durch diese Ausführungsform ist ein langsamer oder schneller Druckaufbau oder -abbau entsprechend den Anforderungen sicher gewährleistet, wobei gleichzeitig eine besonders wirkungsvolle Pulsationsentkopplung der Betätigungseinrichtung 1 erzielt wird. Es erfolgt ferner eine gleichmäßige Beaufschlagung der Radbremsen einer Achse des Fahrzeugs, ein "Schiefziehen" durch eine ungleichmäßige Bremsdruckverteilung wird vermieden.

Zur Realisierung der erfindungsgemäßen Bremsanlage sind im Regelfall nur eine einkreisige Pumpe 16, insgesamt drei Regelventile 21,50,51 und acht Schaltventile 45,46,47,48,52,53,56,57 notwendig, wobei eine derartige Bremsanlage im Grundsatz für alle elektronischen Bremsregelungssysteme, wie ABS, ASR, ESP, HBA oder ACC geeignet ist. Bei Ausfall des Systems sind alle vier Radbremsen 8,9,10,11 durch Fahrerkraft betätigbar. Ein Druckabbau in einer Regelungsphase eines elektronischen Bremsregelungssystems, z.B. des ABS, ist bis auf 0 bar möglich. Der Regelungseingriff durch ASR kann entkoppelt von einer Betätigung durch den Fahrer erfolgen. Im Fall einer ESP-Regelung kann durch eine hydraulische Verbindung zu dem Druckmittel-Vorratsbehälter 20 mit einem entsprechend großen Querschnitt Druckmittel rasch angesaugt werden, womit ein schneller Aufbau von hohen Bremsdrücken in den Radbremsen realisiert werden kann.

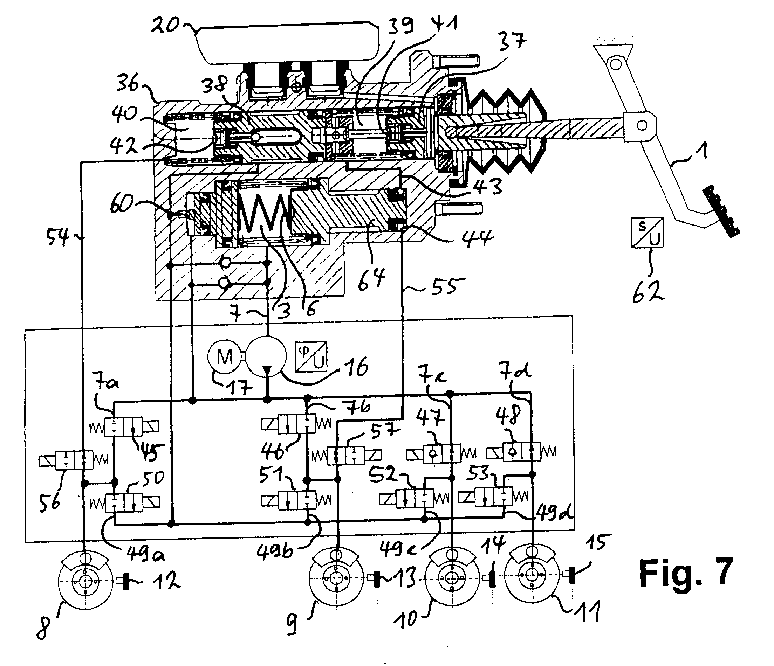

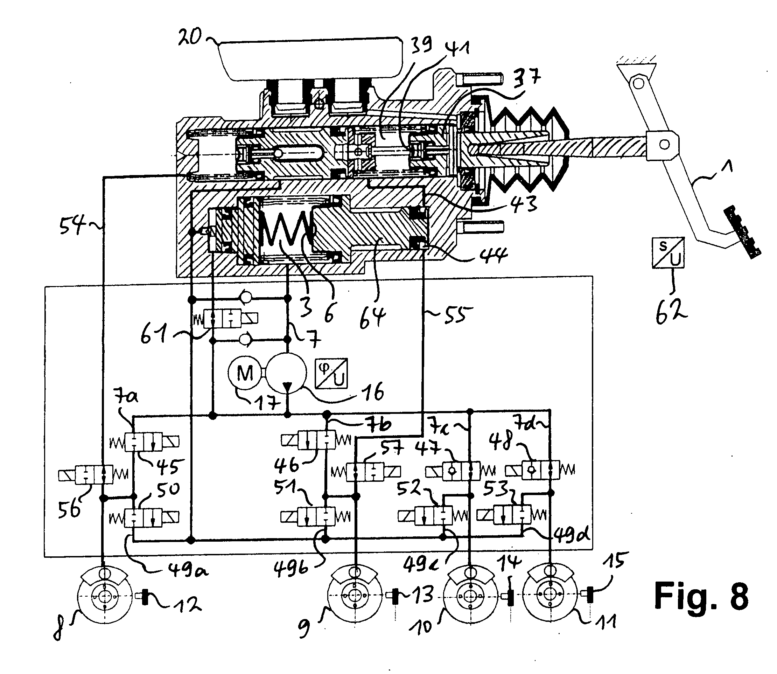

Die Fig. 7 und Fig. 8 zeigen zwei Ausführungsformen der Erfindung, bei denen das Ventil 21 entfällt und dessen Funktion ersetzt wird durch ein hydraulisch-mechanisch gesteuertes Ventil 60. Bei der in der Fig. 8 gezeigten Bremsanlage ist zusätzlich ein Absperrventil 61 angeordnet, womit für eine Aktivbremsung nach Maßgabe eines Bremsenregelungssystems, wie ASR oder ESP, ein Umschaltung auf Fremdansteuerung durch des elektronische Bremsenregelungssystem erfolgen kann.

### Bezugszeichenliste:

- 1: Betätigungspedal
- 2: Bremsdruckqebereinheit
- 3: erste hydraulische Kammer
- 4: erster Kolben
- 5: Zentralventil
- 6: Feder
- 7: erste hydraulische Leitung
- 7': dritte hydraulische Leitung
- 8: erste Radbremse
- 9: zweite Radbremse
- 10: dritte Radbremse
- 11: vierte Radbremse
- 12: erster Raddrehzahlsensor
- 13: zweiter Raddrehzahlsensor
- 14: erster Raddrenzahlsensor
- 15: zweiter Raddrehzahisensor
- 16: Pumpe
- 16': bidirektionale Pumpe
- 17: Motor
- 18: Rückschlagventil
- 19: zweite hydraulische Leitung
- 20: Druckmittel-Vorratsbehälter
- 21: Ventil
- 22: Rüchschlagventil
- 23: erster Drucksensor
- 24: zweite hydraulische Kammer
- 25: Folgekolben
- 26: Folgeventil
- 27: Stellstange
- 28: erste hydraulische Kolbenkammer
- 29: vierte hydraulische Leitung
- 30: fünfte hydraulische Leitung
- 31: sechste hydraulische Leitung
- 32: Rückschlagventil
- 33: Drossel
- 34: siebte hydraulische Leitung
- 35: Zentralventil
- 36: Tandem- Hauptbremszylinder
- 37: erste Hauptzylinderkolben
- 38: zweite Hauptzylinderkolben
- 39: erste Hauptzylinderkammer
- 40: zweite Hauptzylinderkammer
- 41: Zentralventil
- 42: Zentralventil
- 43: achte hydraulische Leitung
- 44: zweite hydraulische Kolbenkammer
- 45: Einlaßventil
- 46: Einlaßventil
- 47: Einlaßventil
- 48: Einlaßventil
- 49: neunte hydraulische Leitung
- 50: Auslaßventil
- 51: Auslaßventil
- 52: Auslaßventil
- 53: Auslaßventil
- 54: zehnte hydraulische Leitung
- 55: elfte hydraulische Leitung
- 56: Trennventil
- 57: Trennventil
- 58: Dämpfungskammer
- 59: Druckbegrenzungsventil
- 60: hydraulisch-mechanisch gesteuertes Ventil
- 61: Absperrventil
- 62: Wegsensor
- 63: zweiter Drucksensor
- 64: Trennkolben
- 65: Zentralventil

## Patentansprüche

1. Hydraulische Bremsanlage für Fahrzeuge, mit einer Bremsdruckgebereinheit (2), die durch Einleitung einer Betätigungskraft über eine Betätigungseinrichtung (1) betätigbar ist, die eine erste hydraulische Kammer (3) aufweist, deren Volumen sich bei Betätigung der Bremsdruckgebereinheit (2) verkleinert, aus der aufgrund der Volumenverkleinerung Druckmittelvolumen verdrängt wird und an der Radbremsen (8,9,10,11) mittels einer ersten hydraulischen Verbindung (7) angeschlossen sind, in der eine Pumpe (16, 16') angeordnet ist, durch die das aufgrund der Volumenverkleinerung aus der ersten hydraulischen Kammer (3) verdrängte Druckmittelvolumen in die Radbremse (8,9,10,11) förderbar ist, wobei die erste hydraulische Kammer (3) ein elastisches Mittel (6) aufweist, **dadurch gekennzeichnet, dass** bei der Einleitung einer Betätigungskraft der Betätigungseinrichtung (1) eine Kraft-Weg-Kennlinie aufgeprägt wird, die einerseits durch die Kennlinie des elastischen Mittels (6) und andererseits durch eine Kraft-Bremsdruck-Kennlinie, die durch die Ansteuerung der Pumpe (16, 16') einstellbar ist, gebildet wird und dem Fahrer ein komfortables Rückwirkungsgefühl vermittelt.

2. Bremsanlage nach Anspruch 1,
**dadurch gekennzeichnet, dass** die Pumpe (16') als bidirektional fördernde Pumpe ausgebildet ist.

3. Bremsanlage nach Anspruch 1 oder 2,
**dadurch gekennzeichnet, dass** zwischen der ersten hydraulischen Kammer (3) und den Radbremsen (8,9,10,11) eine zweite hydraulische Verbindung (19) angeordnet ist, in der ein Regelventil (21), vorzugsweise ein Analogventil, angeordnet ist.

4. Bremsanlage nach Anspruch 3,
**dadurch gekennzeichnet, dass** ein Rückschlagventil (18) vorgesehen ist, das durch die Druckdifferenz zwischen der ersten hydraulischen Kammer (3) und den Radbremsen (8,9,10,11) ansteuerbar ist und bei Überdruck in der ersten hydraulischen Kammer (3) die zweite hydraulische Verbindung (19) öffnet.

5. Bremsanlage nach Anspruch 3 oder 4,
**dadurch gekennzeichnet, dass** das Regelventil (21) als Teil eines hydraulisch-mechanischen Position-Folgereglers (4,25,26,27) ausgebildet ist und dass die Ventilstellung des hydraulisch-mechanischen Position-Folgereglers (4,25,26,27) aufgrund einer Verformung des elastischen Mittels (6) veränderbar ist.

6. Bremsanlage nach einem der Ansprüche 1 bis 5,
**dadurch gekennzeichnet, dass** zwischen der ersten hydraulischen Kammer (3) und einem Druckmittelvorratsbehälter (20) eine dritte hydraulische Verbindung (34) besteht, in der ein zweites Ventil (5) angeordnet ist.

7. Bremsanlage nach einem der Ansprüche 1 bis 6,
**dadurch gekennzeichnet, dass** die Bremsdruckgebereinheit (2) einen Hauptbremszylinder (36) mit mindestens einer hydraulischen Kammer (Hauptbremszylinder-Kammer), vorzugsweise einen Tandemhauptbremszylinder (36) mit zwei hydraulischen Hauptbremszylinder-Kammern (39,40), aufweist, dessen eine Hauptbremszylinder-Kammer (39) über eine hydraulische Leitung (43) verbunden ist mit einer zweiten Kolbenkammer (44), in der durch einen Trennkolben (64) das elastische Mittel (6), das in der ersten hydraulischen Kammer (3) angeordnet ist, mit Druckkraft beaufschlagbar ist.

8. Bremsanlage nach Anspruch 7,
**dadurch gekennzeichnet, dass** die mindestens eine Hauptbremszylinder-Kammer, vorzugsweise zwei Hauptbremszylinder-Kammern (39,40) eines Tandemhauptbremszylinder (36), mit zwei vorzugsweise vorderen Radbremsen (8,9) verbunden sind über mindestens eine hydraulische Leitung, vorzugsweise zwei hydraulische Leitungen (54,55), in die ein elektronisch ansteuerbares Ventil (56,57) eingefügt ist, dass zwischen der ersten hydraulischen Kammer (3) und den Radbremsen (8,9,10,11) elektronisch ansteuerbare Ventile (45,46,47,48) vorgesehen sind und dass zwischen einer neunten hydraulischen Leitung (49), zur Rückführung von Druckmittel aus den Radbremsen (8,9,10,11), elektronisch ansteuerbare Ventile (50,51,52,53) angeordnet sind.

9. Bremsanlage nach Anspruch 7 oder 8,
**dadurch gekennzeichnet, dass** die mindestens eine Hauptbremszylinder-Kammer, vorzugsweise zwei hydraulische Kammern (39,40) eines Tandemhauptbremszylinder (36), mit zwei vorzugsweise vorderen Radbremsen (8,9) verbunden sind über mindestens eine hydraulische Leitung, vorzugsweise zwei hydraulische Leitungen (54,55), in die ein Trennventil, vorzugsweise jeweils ein elektromagnetisch betätigbares, stromlos offenes Trennventil (56,57), eingefügt ist und dass die ein elastisches Mittel (6) aufweisende, erste hydraulische Kammer (3) mit zwei vorzugsweise hinteren Radbremsen (10,11) über die Leitung 7 und daran anschließende Leitungsabschnitte 7c,7d verbunden ist, in die ein Trennventil, vorzugsweise jeweils ein elektromagnetisch betätigbares, stromlos offenes Trennventil (47,48), eingefügt ist und dass die ein elastisches Mittel (6) aufweisende, erste hydraulische Kammer (3) mit den zwei vorzugsweise vorderen Radbremsen (8,9) über die Leitung 7 und daran anschließende Leitungsabschnitte 7a,7b verbindbar ist, in die ein Trennventil, vorzugsweise jeweils ein elektromagnetisch betätigbares, stromlos geschlossenes Trennventil (45,46), eingefügt ist.

10. Bremsanlage nach einem der Ansprüche 7 bis 9,
**dadurch gekennzeichnet, dass** eine neunte hydraulische Leitung (49) angeordnet ist, die über Trennventile (50,51,53,54), vorzugsweise elektromagnetisch betätigbare, stromlos geschlossene Ventil, absperrbar ist und in einer Schaltstellung einen Rückfluß von Druckmittel von den Radbremsen (8,9,10,11), vorzugsweise über eine Hauptbremszylinder-Kammer (39), in den Druckmittel-Vorratsbehälter (20) ermöglicht.

## Claims

1. Hydraulic brake system for vehicles with a brake pressure generator unit (2) which is operable by introducing an actuating force by way of an actuating device (1) that includes a first hydraulic chamber (3) having a volume which decreases when the brake pressure generator unit (2) is actuated, out of which pressure fluid volume is displaced due to the volume decrease and to which wheel brakes (8, 9, 10, 11) are connected by way of a first hydraulic connection (7), wherein a pump (16, 16') is arranged which is capable of delivering the pressure fluid volume into the wheel brakes (8, 9, 10, 11) that is displaced out of the first hydraulic chamber (3) due to the volume decrease, and the first hydraulic chamber (3) includes an elastic means (6),
**characterized in that** a force/travel characteristic curve is determined in the actuating device (1) when an actuating force is introduced, said curve being formed by the characteristic curve of the elastic means (6), on the one hand, and, on the other hand, by a force/brake-pressure characteristic curve which is adjustable by the actuation of the pump (16, 16') and imparts a comfortable feedback feeling to the driver.

2. Brake system as claimed in claim 1,
**characterized in that** the pump (16') is configured as a bidirectional pump.

3. Brake system as claimed in claim 1 or 2,
**characterized in that** a second hydraulic connection (19) is disposed between the first hydraulic chamber (3) and the wheel brakes (8, 9, 10, 11) and houses a control valve (21), preferably an analog valve.

4. Brake system as claimed in claim 3,
**characterized in that** there is provision of a non-return valve (18) which is operable by the difference in pressure between the first hydraulic chamber (3) and the wheel brakes (8, 9, 10, 11), and which opens the second hydraulic connection (19) when excess pressure prevails in the first hydraulic chamber (3).

5. Brake system as claimed in claim 3 or 4,
**characterized in that** the control valve (21) is designed as a part of a hydraulic-mechanical position follow-up controller (4, 25, 26, 27), and **in that** the valve position of this hydraulic-mechanical position follow-up controller (4, 25, 26, 27) is variable due to a deformation of the elastic means (6).

6. Brake system as claimed in any one of claims 1 to 5,
**characterized in that** a third hydraulic connection (34) accommodating a second valve (5) is provided between the first hydraulic chamber (3) and a pressure fluid supply reservoir (20).

7. Brake system as claimed in any one of claims 1 to 6,
**characterized in that** the brake pressure generator unit (2) includes a master brake cylinder (36) with at least one hydraulic chamber (master brake cylinder chamber), preferably a tandem master brake cylinder (36) with two hydraulic master brake cylinder chambers (39, 40), one master brake cylinder chamber (39) thereof being connected by way of a hydraulic line (43) to a second piston chamber (44) in which the elastic means (6) that is arranged in the first hydraulic chamber (3) can be acted upon by pressure force by means of a separating piston (64).

8. Brake system as claimed in claim 7,
**characterized in that** the at least one master brake cylinder chamber, preferably two master brake cylinder chambers (39, 40) of a tandem master brake cylinder (36), are connected to two preferably front wheel brakes (8, 9) by way of at least one hydraulic line, preferably two hydraulic lines (54, 55), into which an electronically operable valve (56, 57) is inserted, **in that** there is provision of electronically operable valves (45, 46, 47, 48) between the first hydraulic chamber (3) and the wheel brakes (8, 9, 10, 11), and **in that** electronically operable valves (50, 51, 52, 53) are arranged between a ninth hydraulic line (49) for the return of pressure fluid out of the wheel brakes (8, 9, 10, 11).

9. Brake system as claimed in claim 7 or 8,
**characterized in that** the at least one master brake cylinder chamber, preferably two hydraulic chambers (39, 40) of a tandem master brake cylinder (36), are connected to two preferably front wheel brakes (8, 9) by way of at least one hydraulic line, preferably two hydraulic lines (54, 55), inserted into which is a separating valve, preferably each one electromagnetically operable, normally open separating valve (56, 57), and **in that** the first hydraulic chamber (3) which includes an elastic means (6) is connected to two preferably rear wheel brakes (10, 11) by way of the line (7) and succeeding line portions (7c, 7d), into which a separating valve, preferably each one electromagnetically operable, normally open separating valve (47, 48), is inserted, and **in that** the first hydraulic chamber (3) which includes an elastic means (6) is connectable to the two preferably front wheel brakes (8, 9) by way of the line (7) and succeeding line portions (7a, 7b), into which a separating valve, preferably each one electromagnetically operable, normally closed separating valve (45, 46) is inserted.

10. Brake system as claimed in any one of claims 7 to 9,
**characterized in that** there is provision of a ninth hydraulic line (49) which can be closed by way of separating valves (50, 51, 53, 54), preferably electromagnetically operable, normally closed valves, and permits in one operating position a return flow of pressure fluid from the wheel brakes (8, 9, 10, 11) into the pressure fluid supply reservoir (20), preferably by way of a master brake cylinder chamber (39).

## Revendications

1. Système de freinage hydraulique pour véhicule, avec un transmetteur de pression de freinage (2) qui, par introduction d'une force d'actionnement, peut être actionné par l'intermédiaire d'un dispositif d'actionnement (1), qui comporte une première chambre hydraulique (3) dont le volume diminue lorsque le transmetteur de pression de freinage (2) est actionné, de laquelle un volume de fluide sous pression est chassé du fait de la réduction du volume et à laquelle des freins de roue (8, 9, 10, 11) sont raccordés au moyen d'une première liaison hydraulique (7), dans laquelle est disposée une pompe (16, 16') par laquelle le volume de fluide sous pression, chassé de la première chambre hydraulique (3) en raison de la réduction du volume peut être transporté dans le frein de roue (8, 9, 10, 11), la première chambre hydraulique (3) comportant un moyen élastique (6), **caractérisé en ce que** lors de l'introduction d'une force d'actionnement du dispositif d'actionnement (1), est imprimée une courbe caractéristique force-distance qui est réglable d'une part par la courbe caractéristique du moyen élastique (6) et d'autre part par une courbe caractéristique force-pression de freinage qui est réglable par la commande de la pompe (16, 16'), et au conducteur est transmise une sensation confortable de rétroaction.

2. Système de freinage selon la revendication 1,
**caractérisé en ce que** la pompe (16') est conçue sous la forme d'une pompe de refoulement bidirectionnelle.

3. Système de freinage selon la revendication 1 ou 2,
**caractérisé en ce qu'**entre la première chambre hydraulique (3) et les freins de roue (8, 9, 10, 11) est disposée une deuxième liaison hydraulique (19) dans laquelle est prévue une soupape de régulation (21), de préférence une soupape analogique.

4. Système de freinage selon la revendication 3,
**caractérisé en ce qu'**il est prévu un clapet de non-retour (18) qui peut être commandé par la différence de pression entre la première chambre hydraulique (3) et les freins de roue (8, 9, 10, 11) et qui, en cas de surpression dans la première chambre hydraulique (3), ouvre la deuxième liaison hydraulique (19).

5. Système de freinage selon la revendication 3 ou 4,
**caractérisé en ce que** la soupape de régulation (21) est conçue en tant que partie d'un régulateur asservi de position (4, 25, 26, 27) hydraulique et mécanique et **en ce que** la position de la soupape du régulateur asservi de position (4, 25, 26, 27) hydraulique et mécanique peut être modifiée sur la base d'une déformation du moyen élastique (6).

6. Système de freinage selon l'une des revendications 1 à 5,
**caractérisé en ce qu'**entre la première chambre hydraulique (3) et un réservoir de fluide sous pression (20) se trouve une troisième liaison hydraulique (34) dans laquelle est disposée une deuxième soupape (5).

7. Système de freinage selon l'une des revendications 1 à 6,
**caractérisé en ce que** le transmetteur de pression de freinage (2) comporte un cylindre de frein principal (36) avec au moins une chambre hydraulique (chambre du cylindre de frein principal), de préférence un cylindre de frein principal tandem (36) avec deux chambres de cylindre de frein principal (39, 40) hydrauliques dont une chambre de frein principal (39) est reliée, par une conduite hydraulique (43), à une deuxième chambre de piston (44) dans laquelle le moyen élastique (6), qui est disposé dans la première chambre hydraulique (3), peut être soumis à une force de pression par un piston de séparation (64).

8. Système de freinage selon la revendications 7,
**caractérisé en ce que** la au moins une chambre de cylindre de frein principal, de préférence deux chambres de cylindre de frein principal (39, 40) d'un cylindre de frein principal tandem (36), sont reliées à deux freins de roue (8, 9), de préférence avant, par au moins une conduite hydraulique, de préférence deux conduites hydrauliques (54, 55), dans lesquelles est insérée une soupape (56, 57) à commande électronique, **en ce qu'**entre la première chambre hydraulique (3) et les freins de roue (8, 9, 10, 11) sont prévues des soupapes (45, 46, 47, 48) à commande électronique, et **en ce qu'**entre une neuvième conduite hydraulique (49), pour le retour du fluide sous pression depuis les freins de roue (8, 9, 10, 11), sont disposées des soupapes (50, 51, 52, 53) à commande électronique.

9. Système de freinage selon la revendication 7 ou 8,
**caractérisé en ce que** la au moins une chambre de cylindre de frein principal, de préférence deux chambres hydrauliques (39, 40) d'un cylindre de frein principal tandem (36), sont reliées à deux freins de roue (8, 9), de préférence avant, par au moins une conduite hydraulique, de préférence deux conduites hydrauliques (54, 55), dans lesquelles est insérée une soupape de séparation, de préférence dans chaque cas une soupape de séparation (56, 57) ouverte lorsqu'elle n'est pas parcourue par un courant et à actionnement électromagnétique, et **en ce que** la première chambre hydraulique (3), comportant un moyen élastique (6), est reliée à deux freins de roue (10, 11), de préférence arrière, par la conduite (7) et des tronçons de conduite (7c, 7d) s'y raccordant, dans lesquels est insérée une soupape de séparation, de préférence dans chaque cas une soupape de séparation (47, 48) ouverte lorsqu'elle n'est pas parcourue par un courant et à actionnement électromagnétique, et **en ce que** la première chambre hydraulique (3), comportant un moyen élastique (6), peut être reliée aux deux freins de roue (8, 9), de préférence avant, par la conduite (7) et des tronçons de conduite (7a, 7b) s'y raccordant, dans lesquels est insérée une soupape de séparation, de préférence dans chaque cas une soupape de séparation (45, 46) fermée lorsqu'elle n'est pas parcourue par un courant et à actionnement électromagnétique.

10. Système de freinage selon l'une des revendications 7 à 9,
**caractérisé en ce qu'**il est prévu une neuvième conduite hydraulique (49) qui peut être fermée par des soupapes de séparation (50, 51, 53, 54), de préférence des soupapes fermées lorsqu'elles ne sont pas parcourues par un courant et à actionnement électromagnétique, et permet, dans une position de commutation, un reflux du fluide sous pression depuis les freins de roue (8, 9, 10, 11), dans le réservoir de fluide sous pression (20), de préférence à travers une chambre de cylindre de frein principal (39).
